Europäisches Patentamt

European Patent Office

Office européen des brevets

(11) Publication number: **0 556 925 A2**

# EUROPEAN PATENT APPLICATION

(21) Application number: **93200454.2**

(22) Date of filing: **17.02.93**

(51) Int. Cl.5: **B60G 17/08**, F16F 9/46

(30) Priority: **18.02.92 NL 9200301**

(43) Date of publication of application:
**25.08.93 Bulletin 93/34**

(84) Designated Contracting States:
**DE FR GB NL**

(71) Applicant: **KONI B.V.**
**Langeweg 1 P.O. Box 1014**
**NL-3260 AA Oud-Beijerland(NL)**

(72) Inventor: **De Kock, Paul**
**Waalhavenstraat 5**
**NL-3262 GP Oud-Beijerland(NL)**

(74) Representative: **de Bruijn, Leendert C.**
**Nederlandsch Octrooibureau**
**Scheveningseweg 82 P.O. Box 29720**
**NL-2502 LS Den Haag (NL)**

(54) **Vehicle shock absorber control.**

(57) Vehicle having per wheel at least one, slidable in and out, continuously variable shock absorber (40) which is mounted between the sprung and unsprung part, in which a control system for the damping force is present for each wheel, in which near the fastening of the shock absorber to the sprung part is provided an acceleration pick-up which is connected to the control system, in which each shock absorber has a direction sensor (41) which is connected to the control system and can detect the sliding in and out of each other of the shock absorber parts, and in which each of the control systems controls the damping force of the corresponding shock absorber at least depending on the magnitude and direction of the speed of the sprung part determined by means of the acceleration pick-up, on condition that the product of v1 and the difference (v1-v2) determined by the direction pick-up is greater than zero, where v1 is the speed of the sprung part, and v1 and v2 in the same direction are regarded as positive.

The control of the damping force can also be refined further by regulating it depending not only on the magnitude and direction of the speed of the sprung part, but also depending on the magnitude of the vertical displacement and/or the acceleration and/or differentials of the acceleration of the sprung part.

Fig.-1

EP 0 556 925 A2

The invention relates to a vehicle having per wheel at least one, slidable in and out continuously variable shock absorber which is mounted between the sprung and unsprung part, and which is provided with pick-ups for measuring the movements of the sprung and unsprung part, while a control system connected to the pick-ups is present for each wheel to control the damping force of said shock absorber.

Such a device is known from EP-B1-0,408,631. However, this publication merely indicates very roughly how the damping force of such a device can be controlled by a control system. EP-B1-0,408,631 only states that a number of pick-ups are necessary to measure the different movements of the vehicle, and that a control system can use the signals from these pick-ups to generate a signal by which a control element in the piston is activated.

If the control strategies specified for this purpose in control technology are followed for continuously variable controlling the damping force of a device of the type known from EP-B1-0,408,631, a great number of pick-ups are required to determine the accelerations, speeds and positions of the sprung and unsprung part. So, at least two pick-ups are needed to measure the speed or acceleration of the sprung and unsprung part of the vehicle. The problem here is, however, that the above-mentioned pick-ups are vulnerable and expensive, generally even more expensive than the shock absorber itself.

The object of the present invention is to provide a device of the type mentioned in the preamble, in which the number of vulnerable and expensive recorders is limited and the damping force can be controlled in a continuously variable manner.

This object is achieved in that per wheel near the fastening of the shock absorber to the sprung part an acceleration pick-up connected to the control system is provided, in that each shock absorber has at least one direction sensor which is connected to its control system and can detect the sliding into and out of each other of the shock absorber parts, and in that each of the control systems controls the damping force of the corresponding shock absorber at least depending on the magnitude and direction of the speed of the sprung part determined by means of the acceleration pick-up, on condition that the product of $V_1$ and the difference ($V_1$-$V_2$) determined by the at least one direction sensor is greater than zero, where $V_1$ is the speed of the sprung part, and $V_2$ is the speed of the unsprung part, and $V_1$ and $V_2$ in the same direction are regarded as positive.

In order to refine the control of the damping force, it is preferable if the control system provided on each wheel regulates the shock absorber(s) belonging to that wheel not only depending on the magnitude and direction of the speed of the sprung part, but also depending on one or more of the following variables:
- magnitude of the vertical displacement of the sprung part
- magnitude of the acceleration of the sprung part
- magnitude of the variation of the acceleration of the sprung part.

A particular advantage of the afore mentioned is that all these variables can be determined from the measurement signal transmitted by the acceleration pick-up.

For further refinement of the damping force it is very advantageous if a central second control system is present for adaptively re-adjusting the said control systems present per wheel on the basis of signals from a steering angle sensor and/or a brake pressure meter and/or a travelling speed meter and/or a selector switch operated by the driver and/or other such means.

The great advantage of the device according to the invention is that one acceleration pick-up is sufficient for each wheel, that the direction sensor required per shock absorber is very simple and cheap to construct, and that control strategies can be applied, which can control the damping force on the basis of the signals from the acceleration pick-up and the direction sensor.

A shock absorber, which is suitable in particular for a vehicle of the type described above, and which has two parts which are slidable in and out relative to each other, is characterised by at least one direction sensor for detecting the sliding in and out of the shock absorber parts and for transmitting a signal indicating the sliding in and out.

Such a direction sensor, for a shock absorber of the type described above, can be designed very simply and cheaply, for example as a switch which is switched on and off through the pressure difference between two shock absorber compartments, this pressure difference being a measure of the retracting and extending of the shock absorber parts.

A direction sensor for a shock absorber of the type described above, comprising a working cylinder with a piston which is movable therein, an external pipe, and an oil reservoir provided between the working cylinder and the external pipe (such as, for example, the shock absorber from EP-B1-0,408,631) preferably comprises a switch provided in the wall of the working cylinder, activated by the pressure difference between the oil reservoir and the working cylinder.

However, many other embodiments in which one or more direction sensors detect the sliding in or out of the shock absorber are also conceivable according to the invention. For example, in a shock absorber with a working cylinder in which a displaceable piston is fitted, one or more of the following embodiments of direction sensors, or combinations thereof, can be very advantageous:

* a direction sensor comprising a switch which is activated by the pressure difference over the piston;
* a direction sensor comprising a flow detector which is placed near the piston and detects the flow from one side to the other side of the piston;
* a direction sensor comprising a movement sensor which indicates the direction of movement of the piston.

In the case of direction sensors comprising a simple switch it can in addition be very advantageous if these direction sensors also have a force element such as a spring, which force element influences the switching point of the switch.

The invention will now be explained in greater detail below with reference to a number of examples and figures, in which:

Figure 1 shows a cross-section of a shock absorber containing a direction sensor according to the invention;

Figure 2 shows a detail of Figure 1, in which the direction sensor is shown in cross-section;

Figure 3 shows a schematic view of the starting point of the control strategy according to the invention;

Figure 4 shows a schematic view of the control strategy according to the invention; and

Figure 5 shows a decision chart for a control algorithm according to the invention.

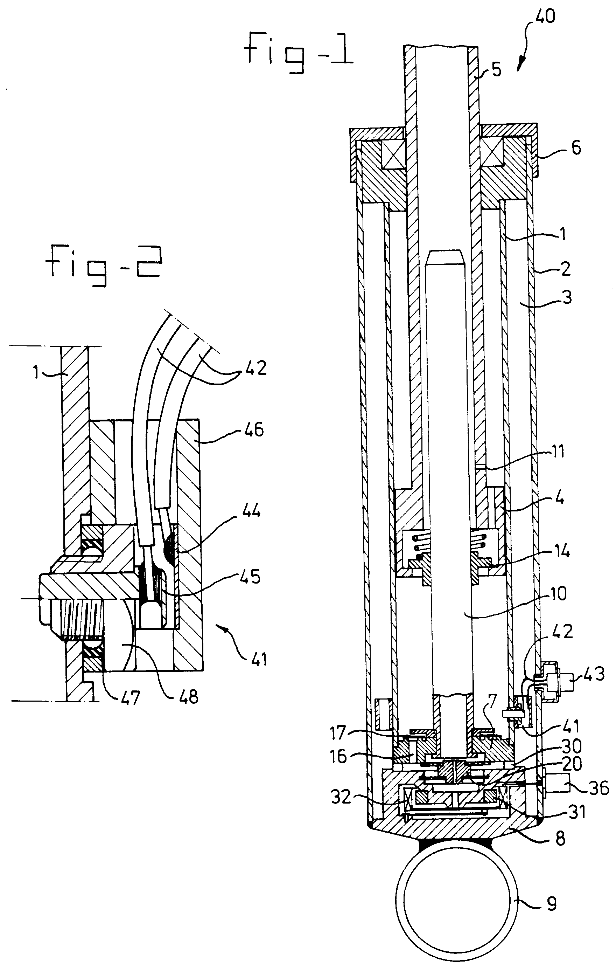

Figure 1 shows a shock absorber 40 with a direction sensor 41 according to the invention mounted therein. The direction sensor is connected by means of two electric wires 42 to a connecting plug 43. It is pointed out here that the shock absorber of Figure 1 is used only to illustrate the invention, and that the invention is by no means limited to this one shock absorber.

For a detailed description of the shock absorber 40 you are referred to EP-B1-0,408,631. Briefly, this shock absorber works as follows:

The shock absorber comprises a working cylinder 1, an external pipe 2, a reservoir 3, a piston 4, a hollow piston rod 5 which is connected to the sprung part, a cover 6 which shuts off the working cylinder 1 and the reservoir 3 and also guides the piston rod 5, a disc 7 which shuts off the working cylinder 1 directly above its lower end, a bottom piece 8 which shuts off the working cylinder 1 and the reservoir 3 at the bottom side and to which a fastening eye 9 for fastening to the unsprung part is fastened, and a hollow central pipe 10 which is open at the top. When the shock absorber 40 slides out, the piston 4 moves upwards together with the piston rod 5. The oil above the piston 4 is in the process pressed through the openings 11 in the hollow piston rod 5 and comes to rest in the central pipe 10. From the bottom of the central pipe the oil flows through the shock absorber valve, of which 20 is the movable valve body, through the channels 16 and the one-way valve 17 into the space below the piston 4. When the shock absorber 40 slides in, the piston 4 moves downwards together with the piston rod 5. The oil below the piston 4 now flows through the one-way valve, of which 14 is the movable valve body, into the increasing space above the piston 4. When the shock absorber 40 slides in, an oil volume corresponding to the incoming volume of the piston rod 5 also flows in via the central pipe 10 through the shock absorber valve, of which 20 is the movable valve body, and through the openings 30 (at the bottom in the working cylinder 1) into the reservoir 3. The damping force of said shock absorber 40 is almost completely determined by the opening of the shock absorber valve, with the movable valve body 20. By means of the control element situated in the bottom piece 8, comprising an electric coil 32 with a connecting plug 36 fixed on the external pipe 2, the opening of the shock absorber valve can be controlled by controlling the control current to the electric coil 32.

Figure 2 shows in a detail from Figure 1 an example of an embodiment of a direction sensor according to the invention, such as that which can be used in a shock absorber according to EP-B1-0,408,631. This direction sensor comprises a housing 46, and a hollow bolt 48 which is screwed into a threaded hole in the working cylinder 1 of the shock absorber. A sealing ring 47 is also used in this case. A contact strip 44 connected to one of the electric wires 42 going to the connecting switch 43 is fixed in the housing 46. The other electric wire 42 is connected to a movable contact point 45. This contact point 45 moves in the hollow bolt 48 under the influence of the pressure difference over the wall of the working cylinder 1, i.e. under the influence of the pressure difference between working cylinder 1 and the reservoir 3. When the shock absorber 40 slides in, the pressure in the working cylinder 1 is higher than that in the reservoir 3, and when it slides out the situation is reversed.

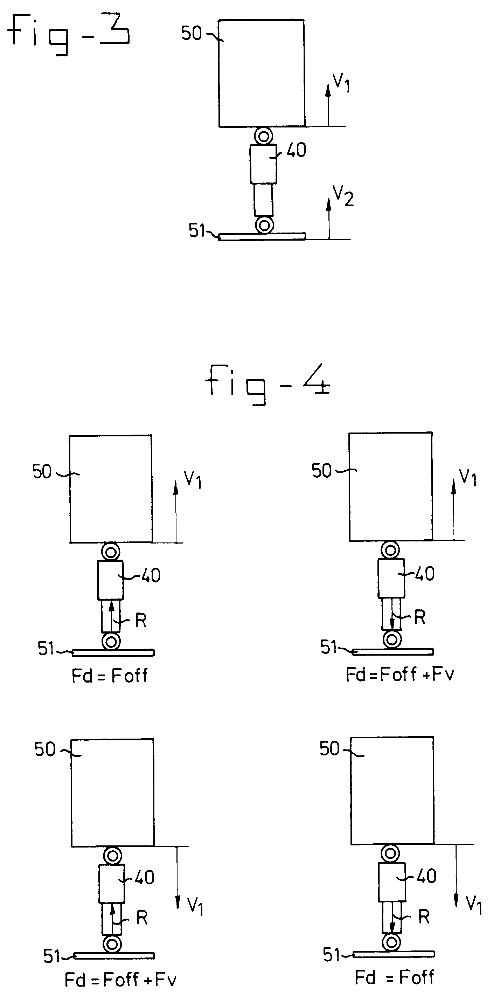

The principle of the control strategy according to the invention will now be explained with reference to Figures 3 and 4. In these figures reference number 50 always indicates the sprung part of the vehicle, 51 the unsprung part of the vehicle, and 40 the shock absorber. Arrow R in Figure 4 here always indicates the movement of the shock absorber 40; an arrow R pointing vertically upwards corresponds to the sliding in of the shock absorber 40, and an arrow R pointing vertically downwards corresponds to the sliding out of the shock absorber 40. Arrows $V_1$ and $V_2$ indicate the direction and speed of the absolute vertical speed of the sprung part 50 and the unsprung part 51 respectively. The speeds $V_1$ and $V_2$ are positive here if the arrows are pointing upwards.

As illustrated in Figure 3, the starting point of the control strategy is that the damping force $F_d$ has a set, possibly adjustable value $F_d = F_{off}$ when $V_1(V_1-V_2) \leq 0$, and that the damping force has a value $F_d = F_{off} + F_v$, with a value to be further specified for $F_v$, when $V_1(V_1-V_2) > 0$. Since for the directions of $V_1$ and $V_2$, as they are shown in Figure 3, when shock absorber 40 slides in, there applies $V_1-V_2 < 0$, and when shock absorber 40 slides out $V_1-V_2 > 0$, the condition for the damping force:

$$F_d = F_{off} \qquad \text{when } V_1(V_1-V_2) \leq 0,$$
$$= F_{off} + F_v \quad \text{when } V_1(V_1-V_2) > 0$$

according to Figure 4 can be replaced by:

$F_d = F_{off}$ when the directions of $V_1$ and R are the same
$F_d = F_{off} + F_v$ when the directions of $V_1$ and R are not the same.

As described before, the direction sensor can detect the sliding in and out of the shock absorber 40. The direction of $V_1$ can be determined by processing the measurement signal transmitted by the acceleration pick-up fixed near the fastening of the shock absorber to the sprung part.

When the directions (according to Figure 4) of $V_1$ and R are not the same, according to the control strategy according to the invention, the value for $F_v$ is determined by means of the following equation:

$F_v = k_1 x + k_2 x' + k_3 x'' + k_4 x'''$

with:

$k_1, k_2, k_3, k_4$:     fixed values to be further specified, which can be positive, negative or zero
x, x', and x'':     position, speed and acceleration, respectively of the sprung part
x''':     variation of the acceleration of the sprung part.
$F_v$ is preferably determined as: $F_v = k_2|x'|$, in which $x' = V_1$.

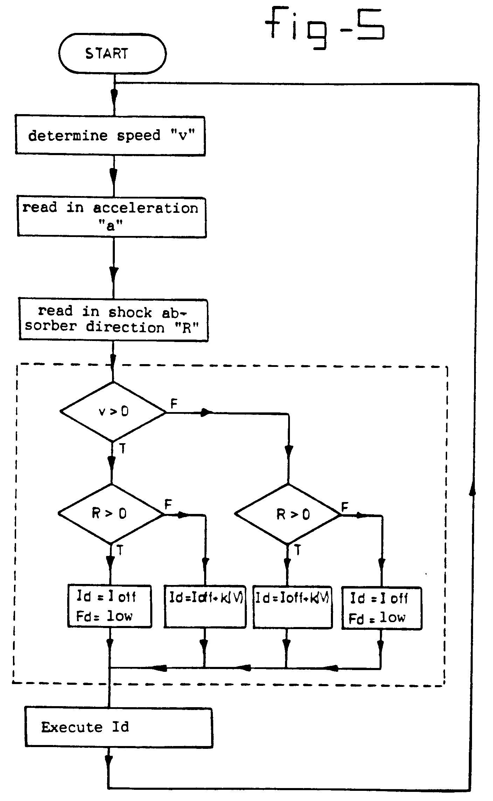

Figure 5 shows as an example a flow chart for a control algorithm which works with $F_v = k_2|V_1|$. First of all, an acceleration "a" of the sprung part measured by the acceleration pick-up is read in. The speed "$V_1$" of the sprung part is then determined from this, $V_1$ vertically upwards being regarded as positive. The signal R transmitted by the direction sensor is then read in. This signal is regarded as positive, i.e. greater than zero, when the shock absorber slides in. It is then determined in the part surrounded by dashed lines whether R and $V_1$ are in the same direction, so that $F_d = F_{off}$ or whether they are different in direction, so that $F_d = F_{off} + k_2|V_1|$. Finally, the damping force determined by this algorithm is set at the shock absorber, and the cycle of this algorithm is run through again. In this way the damping force is regulated in a continuously variable manner, with the minimum value being $F_d = F_{off}$, while the maximum value for $F_d$ depends on the absolute value of the absolute speed of the sprung part.

## Claims

1. Vehicle having per wheel at least one, slidable in and out continuously variable shock absorber fitted between the sprung and unsprung part, and which is provided with pick-ups for the movements of the sprung and unsprung part, while a control system connected to the pick-ups is present for each wheel to control the damping force of said shock absorber, characterised in that per wheel near the fastening of the shock absorber to the sprung part an acceleration pick-up connected to the control system is provided, in that each shock absorber has at least one direction sensor connected to its control system for detecting the sliding in and out of each other of the shock absorber parts, and in that each of the control systems controls the damping force of the corresponding shock absorber at least depending on the magnitude and direction of the speed of the sprung part determined by means of the acceleration pick-up, on condition that the product of $V_1$ and the difference $(V_1-V_2)$ determined by the direction sensor is greater than zero, where $V_1$ is the speed of the sprung part, and $V_2$ is the speed of the unsprung part, and $V_1$, and $V_2$ in the same direction are regarded as positive.

4

2. Vehicle according to Claim 1, characterised in that the control system added to each wheel regulates the damping force of the shock absorber(s) belonging to that wheel not only depending on the magnitude and direction of the speed of the sprung part, but also depending on one or more of the following variables:
   - magnitude of the vertical displacement of the sprung part
   - magnitude of the acceleration of the sprung part
   - magnitude of the variation of the acceleration of the sprung part.

3. Vehicle according to Claim 1 or 2, characterised in that a central second control system is provided for adaptively re-adjusting the said control systems provided per wheel on the basis of signals from a steering angle sensor and/or a brake pressure meter and/or a travelling speed meter and/or a selector switch to be operated by the driver.

4. Shock absorber, in particular suitable for a vehicle according to one of the preceding claims, comprising two parts which are slid in and out relative to each other, characterised by at least one direction sensor which can detect the sliding in and out of the shock absorber parts and which can transmit a signal indicating the sliding in and out.

5. Shock absorber according to Claim 4, comprising a working cylinder with a piston which is movable therein, an external pipe, and an oil reservoir present between the working cylinder and the external pipe, characterised in that the direction sensor comprises a switch mounted in the wall of the working cylinder which is activated by the pressure difference between the oil reservoir and the working cylinder.

6. Shock absorber according to Claim 4, comprising a working cylinder with a piston which is movable therein, characterised in that the direction sensor comprises a switch activated by the pressure difference over the piston.

7. Shock absorber according to Claim 5 - 6, characterised in that the direction sensor also comprises a force element such as a spring which influences the switching point of the switch.

8. Shock absorber according to Claim 4, comprising a working cylinder with a piston which is movable therein, characterised in that the direction sensor comprises a flow detector which is placed near the piston and detects the flow from one side to the other side of the piston.

9. Shock absorber according to Claim 4, comprising a working cylinder with a piston which is movable therein, characterised in that the direction sensor comprises a movement sensor which indicates the direction of movement of the piston.

Fig-1

Fig-2

Fig-3

Fig-4

$Fd = Foff$

$Fd = Foff + Fv$

$Fd = Foff + Fv$

$Fd = Foff$

# fig-5